# EUROPÄISCHE PATENTSCHRIFT

(11) **EP 1 766 822 B1**
(45) Veröffentlichungstag und Bekanntmachung des Hinweises auf die Patenterteilung: **10.09.2008**
(21) Anmeldenummer: 05747409.0
(22) Anmeldetag: 03.06.2005
(51) Int. Cl.: H04K 1/00, H04B 1/713

(54) **VERFAHREN ZUM BETREIBEN EINES VERSCHLÜSSELTEN FUNKNETZES**
METHOD FOR OPERATING AN ENCIPHERED RADIO NETWORK
PROCEDE POUR FAIRE FONCTIONNER UN RESEAU RADIO CODE

(30) Priorität: 12.07.2004 DE 102004033610
(43) Veröffentlichungstag der Anmeldung: 28.03.2007
(73) Patentinhaber: Rohde & Schwarz SIT GmbH, 12489 Berlin (DE)
(72) Erfinder: SÖRGEL, Dieter, 15345 Altlandsberg (DE); VOLL, Ingo, 14641 Wustermark (DE)
(74) Vertreter: Körfer, Thomas
(86) Internationale Anmeldenummer: PCT/EP2005/006006
(87) Internationale Veröffentlichungsnummer: WO 2006/012940

(56) Entgegenhaltungen:
- EP-A- 0 663 737
- SUTTON: "Secure Communications: Applications annd Management. CHAPTER 7" [Online] 2002, JOHN WILEY AND SONS, LTD , XP002336927 ISBN: 0-470-84599-6 Gefunden im Internet: URL:http://www3.interscience.wiley.com/cgi -bin/booktext/93516598/BOOKPDFSTART> [gefunden am 2005-07-19] Seite 178 - Seite 179 Seite 194, Spalte 199

## Beschreibung

Die Erfindung betrifft ein Verfahren zum Betreiben eines verschlüsselten Funknetzes, welches beispielsweise bei militärischen Funkübertragungsnetzen Anwendung finden kann.

Zum Stand der Technik wird beispielsweise auf die EP 0 663 737 A2 verwiesen, aus welcher das sogenannte Hailing für Mobilfunknetze hervorgeht.

In Kapitel 7 des von Roger J. Sutton verfassten Werkes "Secure communications: Applications and Management", erschienen 2002 als gebundene Ausgabe im Verlag John Wiley & Sons, Ltd mit der ISBN-Nr. 0-471-49904-8, ist ein Verfahren zum Betreiben eines Funknetzwerkes beschrieben. Bei diesem Verfahren wird die Betriebsfrequenz nach einem verschlüsselten Frequenzsprungverfahren systematisch gewechselt und nur während der Zeitspanne eines Frequenzsprungs (Hop) beibehalten. Mehrere Frequenzsprünge (Hops) werden zu einer Service Einheit (service intervall) zusammengefasst, wobei innerhalb dieser Service Einheit bzw. innerhalb dieses service intervalls an einer variierbaren Position ein Service Fenster (service window) angeordnet ist, innerhalb dessen bestimmte Frequenzsprünge (Hops) für zumindest eine der folgenden Funktionalitäten festgelegt sind: verspäteter Verkehrseintritt eines Funkteilnehmers, allgemeiner Anruf (hailing) eines Funkteilnehmers und Unterbrechung (Break in) einer bestehenden Verbindung durch einen Funkteilnehmer.

Der Erfindung liegt die Aufgabe zugrunde, ein Verfahren zum Betreiben eines Funknetzwerkes, bei welchem die Betriebsfrequenz nach einem verschlüsselten Frequenzsprungschema schematisch gewechselt wird, zu schaffen, welches eine erweiterte Funktionalität und eine höhere Betriebs- und Abhörsicherheit gewährleistet.

Die Aufgabe wird durch die Merkmale des Anspruchs 1 gelöst. Die Unteransprüche betreffen vorteilhafte Weiterbildungen der Erfindung.

Der Erfindung liegt die Erkenntnis zugrunde, daß die unterschiedlichen Funktionalitäten des Funknetzwerkes, insbesondere ein verspäteter Verkehrseintritt (Late Traffic Entry) eines Funkgeräts in das Funknetzwerk, wenn der normale Verbindungsaufbau verpaßt wurde, eine Unterbrechung des Funkbetriebs (Break In) durch ein höherpriorisiertes Funkgerät oder ein allgemeiner (Not-) Anruf (Hailing) eines beliebigen Funkgeräts, dadurch realisiert werden können, daß in einem sogenannten Service Window verschiedene Hops für die unterschiedlichen Funktionalitäten reserviert werden. Unter Hop wird im folgenden die Frequenzverweilzeit verstanden, während welcher die Betriebsfrequenz konstant gehalten wird, bevor nach dem verschlüsselten Frequenzsprungschema auf die nächste Betriebsfrequenz gesprungen wird. Das Service Window ist an einer variablen Position in einem übergeordneten Service Intervall angeordnet. Die für die unterschiedlichen Funktionalitäten reservierten Hops ermöglichen einen Anruf eines noch nicht am Funkverkehr beteiligten Funkgeräts für den Late Traffic Entry, das Break In oder Hailing.

Es ist vorteilhaft, wenn die Anordnung des Service Window in dem Service Intervall ständig geändert wird.

Ferner ist es vorteilhaft, wenn das Service Window in einem Verkehrsmodus und in einem Suchmodus eine unterschiedliche Länge hat. In dem Verkehrsmodus kann das Service Window dann nur eine bestimmte Anzahl an Hops beinhalten, während welcher ein verspäteter Verkehrseintritt durch ein noch nicht am Funkverkehr beteiligtes Funkgerät ermöglicht wird, und eine weitere Anzahl von Hops beinhalten, während welcher ein Break In erfolgen kann.

In einem Suchmodus kann das Service Window dann zusätzliche Hops für den allgemeinen (Not-) Anruf, das Hailing, beinhalten. Dabei kann ein Hop für einen netzübergreifenden Anruf (General Hailing) und ein anderer Hop für einen netzspezifischen Anruf (Net Hailing) vorgesehen sein. Weitere Hops können in einem erweiterten Suchmodus für einen verspäteten Netzeintritt (Late Net Entry) vorgesehen sein, um eine Zeitsynchronisation des in das Netz eintretenden Funkgeräts mit dem die Zeitreferenz aussendenden Funkgerät (Time Reference Unit) zu ermöglichen.

Ein Ausführungsbeispiel der Erfindung wird nachfolgend unter Bezugnahme auf die Zeichnung näher beschrieben. In der Zeichnung zeigen:
- Fig. 1: einen schematischen Überblick über ein Datenkommunikationssystem, bei welchem das erfindungsgemäße Verfahren verwendet werden kann;
- Fig. 2: ein Betriebsschema des Datenkommunikationssystems;
- Fig. 3A: die Struktur der SYNCH-Hops;
- Fig. 3B: die Struktur der Daten-Hops;
- Fig. 4: die Position des Service Windows in dem Service Intervall und der Aufbau des Service Windows und
- Fig. 5: die genaue Struktur des Service Window.

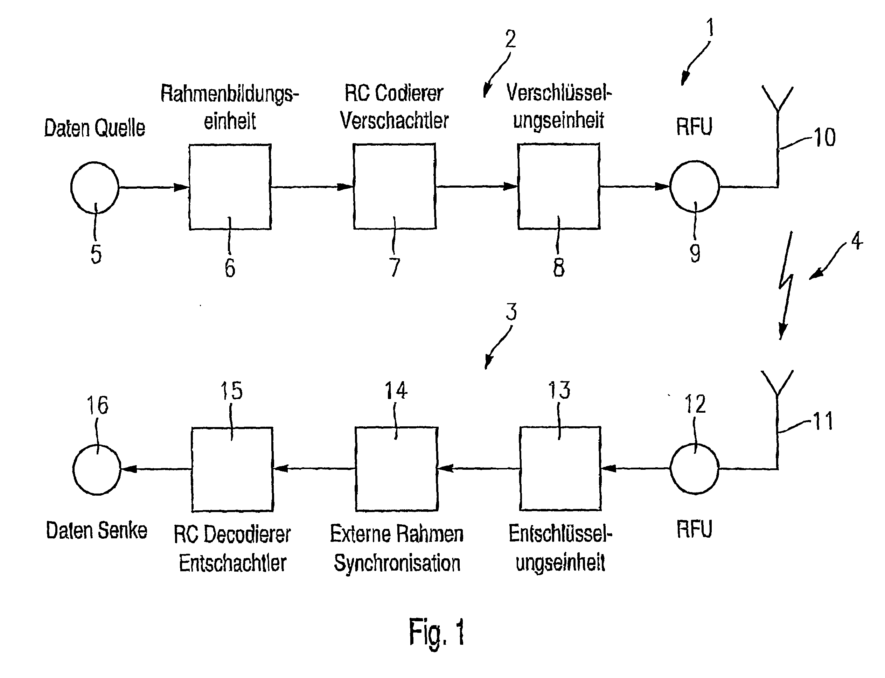

Fig. 1 zeigt ein Beispiel eines Funkkommunikationssystems, bei welchem das erfindungsgemäße Verfahren verwendet werden kann. Das Funkkommunikationssystem 1 besteht aus einem Sender 2, einem Empfänger 3 und einer dazwischen befindlichen Funkübertragungsstrecke 4 (Funkschnittstelle). Jedes in dem Funkkommunikationssystem vorhandene Funkgerät besteht typischerweise aus einer Kombination von Sender 2 und Empfänger 3 (Transceiver). Es können aber auch reine Sendestationen oder reine Empfangsstationen vorhanden sein.

Die Daten werden aus einer Datenquelle 5 einer Rahmenbildungseinheit 6 und dann einem Codierer (Encoder) und Verschachteler (Interleaver) 7 zugeführt. Die Verschlüsselung erfolgt in einer nachfolgenden Verschlüsselungseinheit (Encipher) 8. Schließlich erfolgt die Modulation und Aufbereitung in Hochfrequenzlage in einer Hochfrequenzeinheit (Radio Frequency Unit RFU) 9 und die Aussendung über eine Sendeantenne 10.

Der Empfang erfolgt über eine Empfangsantenne 11 und eine Hochfrequenzeinheit 12. Die Entschlüsselung erfolgt über eine Entschlüsselungseinheit 13. Die Rahmensynchronisation erfolgt in einer Synchronisiereinheit 14 und in einem nachfolgenden Decodierer (Decoder) und Entschachteler (Deinterleaver) 15. Hier wird der ursprüngliche Datenstrom wieder hergestellt und einer Datensenke 16 zugeführt.

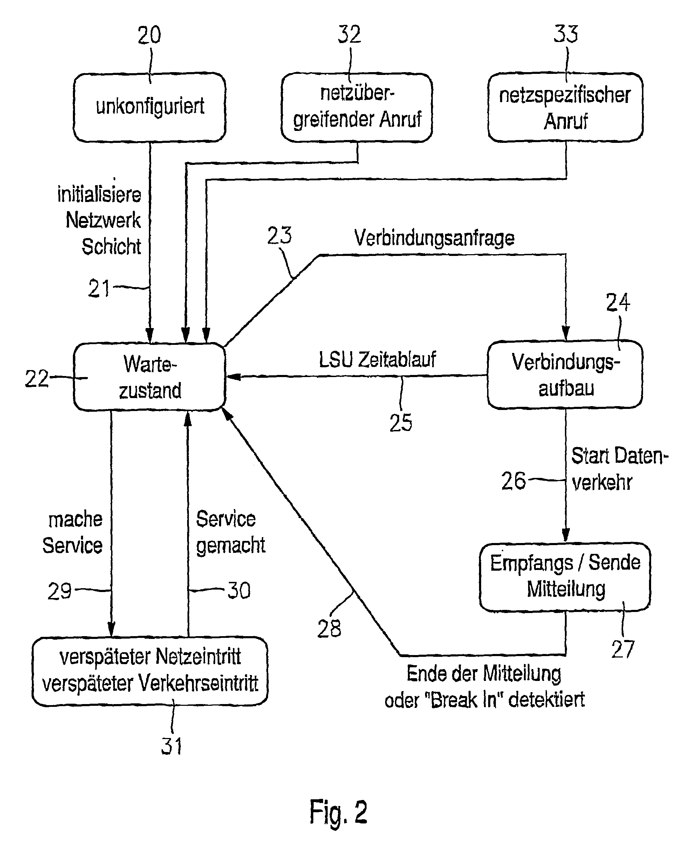

Fig. 2 zeigt ein Schema zur Erläuterung der Betriebsweise des Funknetzwerkes.

In einem Zustand 20 sind die Funkgeräte noch nicht konfiguriert. Durch eine Initialisierung 21 wird das Funknetzwerk initialisiert. Danach befindet sich das Funknetzwerk in einem Wartezustand 22. Auf eine Verbindungsanfrage (Connection Request) 23 hin wird mit dem Verbindungsaufbau (Link Setup) 24 begonnen. Hierfür wird eine maximale Link-Setup-Zeit eingeräumt. Ist diese abgelaufen, so wird dieser Zeitablauf (LSU Time Out) 25 festgestellt und in den Wartezustand 22 zurückgekehrt. War der Verbindungsaufbau erfolgreich, wird im Zustand 26 der Datenverkehr aufgenommen (Start Data Traffic), so daß im Zustand 27 die Nachrichten empfangen und gesendet werden, bis entweder das Ende der Nachricht (End of Message) erreicht ist, oder eine Unterbrechung (Break In) eines höherpriorisierten Funkgeräts festgestellt wird und daraufhin im Schritt 28 in den Wartezustand 22 zurückgekehrt wird.

Daneben gibt es noch die Möglichkeit eines verspäteten Verkehrseintritts (Late Traffic Entry) in die bereits bestehende Verbindung, wenn der normale Verbindungsaufbau (Link Setup) verpaßt wurde, bzw. eines verspäteten Netzeintritts (Late Net Entry) eines Funkgeräts in das bereits initialisierte Funknetzwerk. Hierzu gibt es die Anfrage "Do Service" im Schritt 29, welcher mit "Service Done" im Schritt 30 beantwortet wird, nachdem im Zustand 31 der verspätete Verkehrseintritt (Late Traffic Entry) oder der verspätete Netzeintritt (Late Net Entry) durchgeführt wurde.

Außerdem gibt es die Möglichkeit eines allgemeinen Anrufs (Hailing), welcher hauptsächlich im Notfunkbetrieb als Notanruf verwendet wird. Dabei wird zwischen einem netzübergreifenden Anruf (General Hailing) 32 und einem netzspezifischen Anruf (Net Hailing) 33 unterschieden.

Das erfindungsgemäße Verfahren zum Betreiben des Funknetzwerkes funktioniert nach dem sogenannten Frequenzsprungverfahren, d.h. die Betriebsfrequenz wird ständig nach einem verschlüsselten Frequenzsprungschema systematisch gewechselt und nur während eines sogenannten Hops, d.h. während einer definierten Frequenzverweilzeit, beibehalten. Dabei wird zwischen Synchronisationshops (SYNCH Hop) und Datenhops (Data Hop) unterschieden.

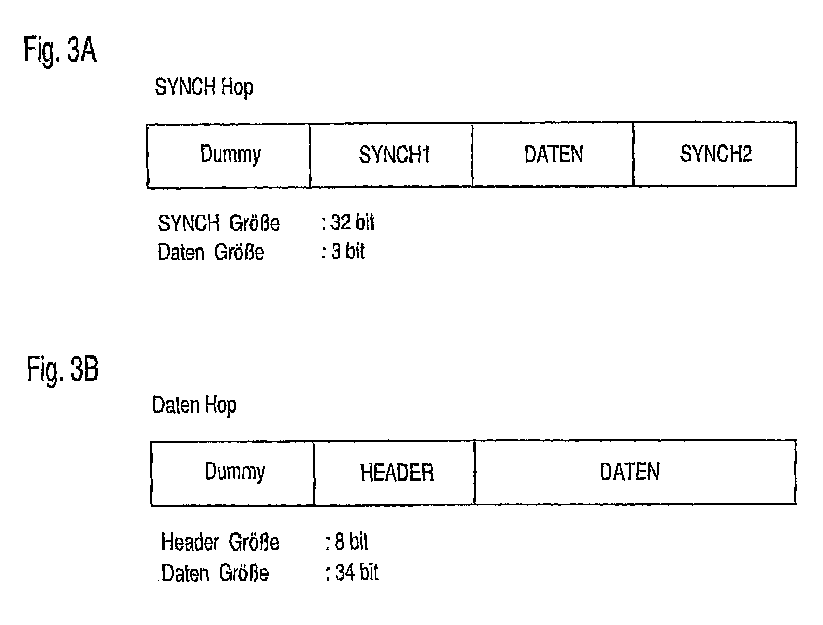

Ein Synchronisationshop ist in Fig. 3A dargestellt. Während zunächst einige Dummy-Bits übertragen werden, folgt anschließend die Übertragung einer Vielzahl von festgelegten Synchronisationsbits in zwei Synchronisationsbit-Feldern SYNCH1 und SYNCH2. Im dargestellten Ausführungsbeispiel beträgt die Länge der Synchronisationsbit-Felder 32 Bit, während die Länge eines kurzen Daten-Feldes DATA, welches zwischen den beiden Synchronisationsbit-Feldern angeordnet ist, nur 3 Bit beträgt.

In Fig. 3B ist die Struktur eines Datenhops dargestellt. Auch hier werden zunächst einige Dummy-Bits übertragen, gefolgt von einigen Header(Kopf)-Bits in einem HEADER-Feld mit der Länge von 8 Bit und danach gefolgt von einem DatenFeld von im Ausführungsbeispiel 34 Bit.

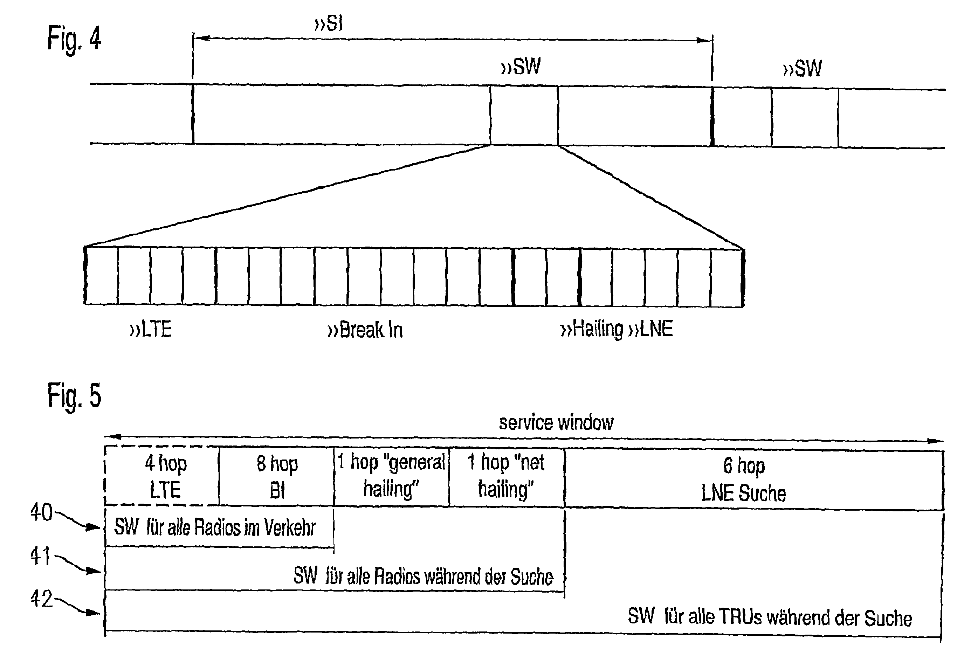

Fig. 4 zeigt die zeitliche Struktur der Datenübertragung. Die Übertragung erfolgt beispielsweise mit 512 Hops/s. 150 Hops bilden ein sogenanntes Service Intervall SI, welches in diesem Beispiel die Länge von 293 ms hat. Jedes Service Intervall SI weist ein Link-Setup-Fenster und ein sogenanntes Service-Fenster SW auf. Über das Service Window SW werden die anhand von Fig. 2 beschriebenen Funktionalitäten des Funknetzes, nämlich verspäteter Verkehrseintritt (Late Traffic Entry), verspäteter Netzeintritt (Late Net Entry), Unterbrechung des Funkbetriebs (Break In) und allgemeiner Anruf (Hailing) ermöglicht. Dazu weist das Service Window die im unteren Teil von Fig. 4 und in Fig. 5 dargestellte Struktur und Belegung der von ihm umfaßten Hops auf. Das Service Window wird vorzugsweise in jedem Service Intervall SI an einer anderen Position entsprechend dem Verschlüsselungsalgorithmus übertragen, was in Fig. 4 angedeutet ist. Durch die ständige Änderung der Position des Service Intervalls wird ein Abhören des Funknetzwerks zusätzlich erschwert.

Wie aus Fig. 5 zu erkennen, hat das Service Window SW vorzugsweise drei unterschiedliche Längen. In einem Verkehrsmodus 40 besteht das Service Window SW aus vier Hops für den verspäteten Verkehrseintritt (Late Traffic Entry) und 8 Hops für die Unterbrechung des Funkbetriebs (Break In). Der Verkehrsmodus wird während einer laufenden Verbindung (Logical Link) verwendet, um das Service Window möglichst kurz zu halten und ein möglichst großes Zeitfenster für die Datenübertragung verwenden zu können. Der verspätete Verkehrseintritt (Late Traffic Entry) ermöglicht es Funkgeräten, die den Link Setup verpaßt haben, noch in eine Verbindung (Logical Link) einzutreten. Dasjenige Funkgerät, das von der Funktion Late Traffic Entry Gebrauch machen möchte, sendet während der ersten vier Hops des Service Windows eine entsprechende Anfrage und Synchronisationsdaten. Die anderen Funkgeräte, die sich entweder im Verkehrsmodus oder in einem der beiden noch zu beschreibenden Suchmodi 41 oder 42 befinden, hören die ersten vier Hops des Service Window SW daraufhin ab, ob dort ein Funkgerät eine Anfrage für ein Late Traffic Entry sendet. Ist dies der Fall, so wird versucht, die Late Traffic Entry-Synchronisationsdaten zu empfangen und eine Verbindung aufzubauen.

Break In dient dazu, eine bestehende Verbindung (Physical Link) zu unterbrechen. Ein Funkgerät, das einen Break In auslöst, sendet auf den dafür vorgesehenen acht Hops eine entsprechende Anfrage bestehend aus Break In Request-Information und Break In Synchronisations-Information. Dabei wird die Netzadresse des den Break In anfragenden Funkgeräts und die Adresse des Funkgeräts, dessen Betrieb unterbrochen werden soll, sowie die Priorität des anfragenden Funkgeräts übertragen. Die anderen Funkgeräte überwachen in jedem Service Window die für den Break In vorgesehenen Hops, unterbrechen ihren Funkbetrieb bei einem Break In mit ausreichender Priorität und beteiligen sich dann an dem Verbindungsaufbau (Link Setup) mit dem den Break In anfragenden Funkgerät. Im dargestellten Ausführungsbeispiel befinden sich die acht Hops für den Break In nach den vier Hops für den Late Traffic Entry.

Funkgeräte, die sich nicht in Verbindung mit anderen Funkgeräten befinden, verwenden den Suchmodus 41. Das Service Window SW ist dabei um jeweils einen Hop für einen netzübergreifenden allgemeinen Anruf (General Hailing) und einen Hop für einen netzspezifischen allgemeinen Anruf (Net Hailing) erweitert. Hailing wird hauptsächlich zur Ermöglichung eines Notrufs verwendet. Die Frequenzen für den General-Hailing-Hop und den Net-Hailing-Hop werden, im Gegensatz zu den anderen Hop-Frequenzen, von Service Intervall zu Service Intervall nicht gewechselt, sondern sind immer gleich. Somit können auch Funkgeräte, die über den Verschlüsselungsalgorithmus für die Hop-Frequenzen nicht verfügen, auf der General-Hailing-Frequenz und der Net-Hailing-Frequenz einen Notruf absetzen.

In dem Funknetzwerk ist ein Funkgerät mit einer Zeitreferenz vorhanden. Dieses Funkgerät (Time Reference Unit) verwendet den erweiterten Suchmodus 42, wobei sich an die beiden Hops für das Hailing sechs weitere Hops für den verspäteten Netzeintritt (Late Net Entry) anschließen. Dasjenige Funkgerät, das auf das Netz zugreifen möchte und zur Synchronisation die Zeitreferenz benötigt, sendet eine entsprechende Anfrage an die Time Reference Unit, die von der Time Reference Unit beantwortet wird.

Die Erfindung ist nicht auf das oben dargestellte Ausführungsbeispiel beschränkt und kann auch bei anderen konkreten Konfigurationen der Funkschnittstelle zum Einsatz kommen. Insbesondere ist die konkret verwendete Anzahl und Anordnung der Hops nur insoweit verbindlich, als sie in dem Hauptanspruch beansprucht wird.

## Patentansprüche

1. Verfahren zum Betreiben eines Funknetzwerkes (1)
wobei die Betriebsfrequenz nach einem verschlüsselten Frequenzsprungschema systematisch gewechselt wird und nur während eines Hops beibehalten wird,
wobei mehrere Hops zu einem Service Intervall zusammengefasst werden und in dem Service Intervall an variabler Position ein Service Window angeordnet ist,
wobei in dem Service Window bestimmte Hops für zumindest eine der folgenden Funktionalitäten des Funknetzwerks festgelegt sind:
- verspäteter Verkehrseintritt eines Funkgeräts in das Funknetzwerk, wenn der normale Verbindungsaufbau verpasst wurde, und/oder
- Unterbrechung des Funkbetriebs durch ein höher priorisiertes Funkgerät, und/oder
- allgemeiner Anruf eines beliebigen Funkgeräts
**dadurch gekennzeichnet,**
**dass** das Service Window in einem Verkehrsmodus (40) und in einem Suchmodus (41, 42) eine unterschiedliche Länge und somit eine unterschiedliche Anzahl an Hops umfasst.

2. Verfahren nach Anspruch 1,
**dadurch gekennzeichnet,**
**dass** die Anordnung des Service Window in dem Service Intervall ständig geändert wird.

3. Verfahren nach Anspruch 1,
**dadurch gekennzeichnet,**
**dass** das Service Window in dem Verkehrsmodus (40) eine bestimmte Anzahl an Hops für den verspäteten Verkehrseintritt, und eine bestimmte Anzahl an Hops für die Unterbrechung des Funkbetriebs, BI beinhaltet.

4. Verfahren nach Anspruch 1,
**dadurch gekennzeichnet,**
**dass** die Anzahl der Hops für den verspäteten Verkehrseintritt 4 beträgt und die Anzahl der Hops für die Unterbrechung des Funkbetriebs 8 beträgt.

5. Verfahren nach Anspruch 1 oder 4,
**dadurch gekennzeichnet,**
**dass** die Hops für den verspäteten Verkehrseintritt vor den Hops für die Unterbrechung des Funkbetriebs angeordnet sind.

6. Verfahren nach einem der Ansprüche 1 bis 5,
**dadurch gekennzeichnet,**
**dass** in einem normalen Suchmodus (41) das Service Window zumindest einen zusätzlichen Hop für den allgemeinen Anruf beinhaltet.

7. Verfahren nach Anspruch 6,
**dadurch gekennzeichnet,**
**dass** ein Hop für einen netzübergreifenden allgemeinen Anruf und ein Hop für einen netzspezifischen allgemeinen Anruf vorgesehen sind.

8. Verfahren nach Anspruch 6 oder 7,
**dadurch gekennzeichnet,**
**dass** die Hops für den allgemeinen Anruf nach den Hops für den verspäteten Verkehrseintritt und den Hops für die Unterbrechung des Funkbetriebs angeordnet sind.

9. Verfahren nach einem der Ansprüche 6 bis 8,
**dadurch gekennzeichnet,**
**dass** in einem erweiterten Suchmodus (42) das Service Window zusätzliche Hops für einen verspäteten Netzeintritt beinhaltet.

10. Verfahren nach Anspruch 9,
**dadurch gekennzeichnet,**
**dass** der erweiterte Suchmodus (42) nur von einem Funkgerät mit Zeitreferenz verwendet wird.

## Claims

1. Method for operating a radio network (1), wherein the operating frequency is changed systematically according to an enciphered frequency-hop scheme and retained only during one hop,
wherein several hops are combined to form a service interval, and a service window is disposed in a variable position within the service interval,
wherein given hops are specified within the service window for at least one of the following functionalities of the radio network:
- late traffic entry of a radio device into the radio network, when the normal connection structure has been missed; and/or
- break-in into radio operation by a higher-priority radio device; and/or
- general hailing of a random radio device,
**characterised in that,**
the service window comprises a different length and therefore a different number of hops in a traffic mode (40) and in a search mode (41, 42).

2. Method according to claim 1,
**characterised in that**
the arrangement of the service window within the service interval is constantly changed.

3. Method according to claim 1,
**characterised in that,**
in the traffic mode (40), the service window contains a given number of hops for the late traffic entry, and a given number of hops for the break-in into radio operation (BI).

4. Method according to claim 1,
**characterised in that**
the number of hops for the late traffic entry is 4, and the number of hops for the break-in into radio operation is 8.

5. Method according to claim 1 or 4,
**characterised in that**
the hops for the late traffic entry are disposed before the hops for the break-in into radio operation.

6. Method according to any one of claims 1 to 5,
**characterised in that,**
in a normal search mode (41), the service window contains at least one additional hop for the general hailing.

7. Method according to claim 6,
**characterised in that**
one hop is provided for a general hailing and one hop is provided for a net hailing.

8. Method according to claim 6 or 7,
**characterised in that**
the hops for the general hailing are disposed after the hops for the late traffic entry and the hops for the break-in into radio operation.

9. Method according to any one of claims 6 to 8,
**characterised in that,**
in an extended search mode (42), the service window contains additional hops for a late network entry.

10. Method according to claim 9,
**characterised in that**
the extended search mode (42) is used only by a radio device with a time reference.

## Revendications

1. Procédé pour faire fonctionner un réseau radio (1),
où la fréquence de fonctionnement est changée systématiquement selon un schéma de saut de fréquence codé et n'est conservée que durant un saut,
où plusieurs sauts sont regroupés dans un intervalle de service et une fenêtre de service est agencée dans l'intervalle de service à une position variable,
où dans la fenêtre de service certains sauts sont déterminés pour au moins une des fonctionnalités suivantes du réseau radio :
- entrée de trafic en retard d'un appareil radio dans le réseau radio si l'établissement de liaison normale avait été manqué, et/ou
- interruption du fonctionnement radio par un appareil radio ayant une priorité plus élevée, et/ou
- appel général d'un appareil radio quelconque
**caractérisé en ce que** la fenêtre de service comporte dans un mode de trafic (40) et dans un mode de recherche (41, 42) une longueur différente et ainsi un nombre différent de sauts.

2. Procédé selon la revendication 1, **caractérisé en ce que** l'agencement de la fenêtre de service est modifié en permanence dans l'intervalle de service.

3. Procédé selon la revendication 1, **caractérisé en ce que** la fenêtre de service contient dans le mode de trafic (40) un certain nombre de sauts pour l'entrée de trafic en retard et un certain nombre de sauts pour l'interruption du fonctionnement radio.

4. Procédé selon la revendication 1, **caractérisé en ce que** le nombre des sauts pour l'entrée de trafic en retard est de 4 et que le nombre des sauts pour l'interruption du fonctionnement radio est de 8.

5. Procédé selon la revendication 1 ou 4, **caractérisé en ce que**,
les sauts pour l'entrée de trafic en retard sont agencés avant les sauts pour l'interruption du fonctionnement radio.

6. Procédé selon l'une des revendications 1 à 5, **caractérisé en ce que**, dans un mode de recherche normal (41), la fenêtre de service contient au moins un saut supplémentaire pour l'appel général.

7. Procédé selon la revendication 6, **caractérisé en ce qu'**il est prévu un saut pour un appel général extérieur au réseau et un saut pour un appel général spécifique au réseau.

8. Procédé selon la revendication 6 ou 7, **caractérisé en ce que** les sauts pour l'appel général sont agencés après les sauts pour l'entrée de trafic en retard et après les sauts pour l'interruption du fonctionnement radio.

9. Procédé selon l'une des revendications 6 à 8, **caractérisé en ce que**, dans un mode de recherche étendu (42), la fenêtre de service contient des sauts supplémentaires pour une entrée de trafic en retard.

10. Procédé selon la revendication 9, **caractérisé en ce que** le mode de recherche étendu (42) n'est employé que par un appareil radio avec référence de temps.
